# EUROPÄISCHE PATENTSCHRIFT

(11) **EP 3 917 810 B1**
(45) Veröffentlichungstag und Bekanntmachung des Hinweises auf die Patenterteilung: **17.07.2024**
(21) Anmeldenummer: 20702606.3
(22) Anmeldetag: 28.01.2020
(51) Int. Cl.: B60V 1/10, B64C 39/06, B60V 1/02, B64C 9/02

(54) **FLUGKÖRPER SOWIE VERFAHREN ZUM BETREIBEN EINES FLUGKÖRPERS**
AIRCRAFT AND METHOD FOR OPERATING AN AIRCRAFT
OBJET VOLANT ET PROCÉDÉ POUR FAIRE FONCTIONNER UN OBJET VOLANT

(30) Priorität: 30.01.2019 DE 102019000682; 15.07.2019 DE 102019210417
(43) Veröffentlichungstag der Anmeldung: 08.12.2021
(73) Patentinhaber: KMTC Vortifer Technologies GmbH, 70736 Fellbach (DE)
(72) Erfinder: OBERMOSER, Karl, 92318 Neumarkt (DE); MEIER, Claudia, 92364 Deining (DE)
(74) Vertreter: Dietz, Christopher Friedrich
(86) Internationale Anmeldenummer: PCT/EP2020/052021
(87) Internationale Veröffentlichungsnummer: WO 2020/157052

(56) Entgegenhaltungen:
- US-A- 2 997 254
- US-A- 3 215 218
- US-A- 3 747 726
- US-A- 5 203 521

## Beschreibung

Die Erfindung betrifft einen Flugkörper sowie ein Verfahren zum Betreiben eines Flugkörpers. Aus dem Stand der Technik ist beispielsweise die Druckschrift DE 20 2018 104 722 U1 bekannt. Diese beschreibt ein Fluggerät mit einer Rahmenstruktur und mehreren an der Rahmenstruktur angeordneten Hubrotoren, mittels derer ein vertikal nach oben gerichteter Primärauftrieb sowie Vortriebskräfte erzeugbar sind. Dabei ist vorgesehen, dass darüber hinaus eine Strahlturbine vorgesehen ist, deren Schubstrahl so ausrichtbar ist, dass ein im Wesentlichen parallel zum Primärauftrieb gerichteter Sekundärauftrieb erzeugbar ist, der dem Primärauftrieb überlagerbar ist.

Ein weiteres Fluggerät ist aus der US5203521 bekannt. Dieses hat einen ringförmigen Körper, welcher von einem Luftstrom umströmt wird, den eine zentrale Luftfördereinrichtung antreibt.

Es ist Aufgabe der Erfindung, einen Flugkörper vorzuschlagen, welcher gegenüber bekannten Flugkörpern Vorteile aufweist, insbesondere hinsichtlich seiner Nutzlast beliebig skalierbar ist und zudem einen besonders effizienten Betrieb ermöglicht.

Dies wird erfindungsgemäß mit einem Flugkörper mit den Merkmalen des Anspruchs 1 erreicht.

Der Flugkörper kann grundsätzlich beliebig ausgestaltet sein, beispielsweise liegt er als unbemanntes Fluggerät oder - bevorzugt - als Luftfahrzeug vor. Unter dem Luftfahrzeug ist ein Fahrzeug zu verstehen, das innerhalb der Erdatmosphäre fliegt. Es stellt insoweit ein mobiles Verkehrsmittel dar, das dem Transport von Personen, Gütern oder dergleichen dient. Das Luftfahrzeug ist also für den Personenverkehr und/oder dem Güterverkehr vorgesehen und ausgebildet. Der Flugkörper beziehungsweise das Luftfahrzeug ist schwerer als Luft und verfügt über die Antriebseinrichtung beziehungsweise einen Kraftantrieb, sodass der Flugkörper insgesamt als Flugzeug bezeichnet werden kann. Ein Flugzeug ist ganz allgemein ausgedrückt ein Luftfahrzeug, das schwerer als Luft ist und den zu seinem Fliegen nötigen dynamischen Auftrieb mit nicht-rotierenden Auftriebsflächen erzeugt.

Der erfindungsgemäße Flugkörper verfügt über die Tragfläche, wobei selbstverständlich auch eine Mehrzahl von Tragflächen vorgehen kann, welche vorzugsweise miteinander verbunden sind, insbesondere über einen Aufbau des Flugkörpers. Im letzteren Fall gelten die nachfolgenden Ausführungen für die Tragfläche bevorzugt für mehrere der Tragflächen oder für jede der Tragflächen. Die Tragfläche wird im Schnitt gesehen von zwei Profilflächen begrenzt, nämlich von der ersten Profilfläche und der zweiten Profilfläche. Die erste Profilfläche und die zweite Profilfläche begrenzen insoweit die Tragfläche in gegenüberliegende Richtungen, insbesondere bezüglich einer Längsmittelachse der Tragfläche beziehungsweise des Flugkörpers. Bei einem bestimmungsgemäßen Betrieb des Flugkörpers ist die erste Profilfläche unten und die zweite Profifläche oben angeordnet, die erste Profilfläche liegt also auf der einem Boden, insbesondere einem Erdboden, zugewandten Seite des Flugkörpers vor, wohingegen die zweite Profilfläche auf einer dem Boden abgewandten Seite des Flugkörpers angeordnet ist.

Im Schnitt gesehen laufen die erste Profilfläche und die zweite Profilfläche an der Tragflächenübergangsstelle zusammen und gehen daher an der Tragflächenübergangsstelle ineinander über. Die Tragflächenübergangsstelle ist beispielsweise eine Linie, insbesondere eine Linie mit stetigem Verlauf und/oder eine durchgehende Linie, oder verläuft durchgehend entlang der Linie. Unter der durchgehenden Linie ist zu verstehen, dass die Linie in sich geschlossen ist, also ein Startpunkt der Linie einem Endpunkt der Linie entspricht und der Startpunkt und der Endpunkt durchgehend miteinander verbunden sind. Die Linie kann beispielsweise eine gerade Linie sein. Bevorzugt ist sie jedoch rund beziehungsweise kreisförmig oder oval. Die Tragflächenübergangsstellen kann einer Tragflächenaußenseite entsprechen oder an dieser vorliegen. Die Tragflächenaußenseite stellt die am weitesten von der Längsmittelachse entfernteste Stelle der Tragfläche dar oder liegt an dieser Stelle vor. Beispielsweise ist die Tragflächenübergangsstelle eine Tragflächenübergangskante, an welcher die erste Profilfläche und die zweite Profilfläche im Schnitt gesehen unstetig aufeinanderstoßen und ineinander übergehen.

Während die erste Profilfläche und die zweite Profilfläche an der Tragflächenübergangsstelle zusammenlaufen, können sie an einer der Tragflächenübergangsstelle im Schnitt gegenüberliegenden Tragflächeninnenseite voneinander beabstandet sein, insbesondere sind sie an der Tragflächeninnenseite voneinander beabstandet. Die erste Profilfläche und die zweite Profilfläche laufen also beispielsweise im Schnitt gesehen ausgehend von der Tragflächenübergangsstelle in Richtung der Tragflächeninnenseite voneinander fort, sodass sie an der Tragflächeninnenseite einen größeren Abstand voneinander aufweisen als an der Tragflächenübergangsstelle. Die Tragflächenübergangsstelle liegt insoweit im Schnitt gesehen in jedem Fall weiter außen als die Tragflächeninnenseite, insbesondere ist sie weiter von der Längsmittelachse beabstandet. Besonders bevorzugt ist es vorgesehen, dass der Abstand zwischen der ersten Profilfläche und der zweiten Profilfläche ausgehend von der Tragflächenübergangsstelle in Richtung der Tragflächeninnenseite stetig wächst. Hierzu sind die beiden Profilflächen entsprechend ausgestaltet und/oder angeordnet. Es kann jedoch auch vorgesehen sein, dass die erste Profilfläche und die zweite Profilfläche auf der Tragflächeninnenseite stetig ineinander übergehen. Mit einer derartigen Ausgestaltung der Tragfläche kann ein besonders turbulenzarmes und damit verlustfreies Einströmen von Luft durch die Lufteintrittsöffnung erzielt werden.

Der Flugkörper weist die Lufteinlassöffnung und die Luftauslassöffnung auf. Während eines Betriebs des Flugkörpers wird durch die Lufteinlassöffnung Luft angesaugt und durch die Luftauslassöffnung ausgebracht. Hierzu sind die Lufteinlassöffnung und die Luftauslassöffnung strömungstechnisch miteinander verbunden, sodass die durch die Lufteinlassöffnung angesaugte Luft nachfolgend durch die Luftauslassöffnung ausgebracht wird. Es kann vorgesehen sein, dass lediglich eine einzige Lufteinlassöffnung vorliegt. Alternativ sind mehrere Lufteinlassöffnungen realisiert. Dies gilt entsprechend für die Luftauslassöffnung, sodass entweder eine einzige Luftauslassöffnung oder mehrere Luftauslassöffnungen vorliegen. Sofern im Rahmen dieser Beschreibung von der Lufteinlassöffnung die Rede ist, so gelten die entsprechenden Ausführungen stets für die wenigstens eine Lufteinlassöffnung und umgekehrt sowie - im Falle mehrerer Lufteinlassöffnungen - für jede der Lufteinlassöffnungen. Analog gelten die Ausführungen für die Luftauslassöffnungen stets für die wenigstens eine Luftauslassöffnung und umgekehrt sowie - im Falle mehrerer Luftauslassöffnungen - für jede der mehreren Luftauslassöffnungen. In diesem Sinne sind die Formulierungen Lufteinlassöffnung und wenigstens eine Lufteinlassöffnung einerseits sowie Luftauslassöffnung und wenigstens eine Luftauslassöffnung andererseits jeweils mit demselben Sinngehalt versehen.

Die Lufteinlassöffnung ist von der ersten Profilfläche und die Luftauslassöffnung von der zweiten Profilfläche eingefasst. Darunter ist insbesondere zu verstehen, dass die Lufteinlassöffnung von der tragflächeninnenseitigen Seite der ersten Profilfläche und die Luftauslassöffnung von der tragflächeninnenseitigen Seite der zweiten Profilfläche begrenzt ist. Insbesondere umgibt die erste Profilfläche die Lufteinlassöffnung und die zweite Profilfläche die Luftauslassöffnung jeweils ringförmig. Es kann jedoch auch vorgesehen sein, dass die Lufteinlassöffnung die erste Profilfläche und/oder die Luftauslassöffnung die zweite Profilfläche durchgreift.

Der Flugkörper verfügt über die Antriebseinrichtung, welche wiederum die Luftfördereinrichtung aufweist. Diese ist dazu vorgesehen und ausgebildet, während des bestimmungsgemäßen Flugbetriebs des Flugkörpers Luft von der Einlassöffnung in Richtung der Luftauslassöffnung zu fördern und insoweit Luft durch die Lufteinlassöffnung anzusaugen und durch die Luftauslassöffnung auszustoßen. Der Flugkörper ist nun geodätisch derart angeordnet, dass während des bestimmungsgemäßen Flugbetriebs des Flugkörpers die erste Profilfläche unten und die zweite Profilfläche oben angeordnet ist. Anders ausgedrückt ist die erste Profilfläche dem Boden beziehungsweise dem Erdboden zugewandt, wohingegen die zweite Profilfläche dem Boden beziehungsweise Erdboden abgewandt ist. Das bedeutet, dass die Antriebseinrichtung Luft von der Unterseite des Flugkörpers auf seine Oberseite fördert. Die Antriebseinrichtung ist insoweit dazu vorgesehen und ausgebildet, Luft von einer auf Seiten der ersten Profilfläche vorliegenden ersten Seite der Tragfläche, welche die Unterseite ist, auf eine auf Seiten der zweiten Profilfläche vorliegende zweite Seite der Tragfläche zu fördern, die die Oberseite darstellt.

Um dennoch Auftrieb zu erzeugen und den Flugbetrieb zu ermöglichen, ist die Luftauslassöffnung zumindest bereichsweise von dem Umlenkelement übergriffen. Das Umlenkelement dient einer Umlenkung der durch die Luftauslassöffnung austretenden Luft und begrenzt hierzu gemeinsam mit der zweiten Profilfläche den Luftaustrittsspalt, der mit der Luftauslassöffnung in Strömungsverbindung steht. Da das Umlenkelement den Luftaustrittsspalt gemeinsam mit der zweiten Profilfläche begrenzt, tritt die aus der Luftauslassöffnung austretende und nachfolgend dem Luftaustrittsspalt zugeführte Luft durch den Luftaustrittsspalt zumindest teilweise parallel oder vollständig parallel zu der zweiten Profilfläche aus. Hierdurch wird ein Luftfilm auf der zweiten Profilfläche ausgebildet, welcher die zweite Profilfläche in Richtung der Tragflächenübergangsstelle überströmt. Der Luftaustrittsspalt ist also insbesondere für eine zu der zweiten Profilfläche parallele Ausbringung der Luft und zur Ausbildung eines Luftfilms auf der zweiten Profilfläche vorgesehen und ausgebildet.

Spätestens an der Tragflächenübergangsstelle reißt der Luftfilm von der zweiten Profilfläche beziehungsweise von dem gesamten Flugkörper ab, um nachfolgend in Form eines Freistrahlluftstroms weiter zu strömen, nämlich in Richtung des Bodens. Dieser Freistrahlluftstrom induziert einen Tragwirbel. Tragflächeninnenseitig unterstützt das Ansaugen der Luft durch die Lufteinlassöffnung die Ausbildung des Tragwirbels, indem die Luft in Form eines Ansaugluftstroms in die Lufteintrittsöffnung angesaugt wird. Im Schnitt gesehen strömt nun einerseits des Tragwirbels der Freistrahlluftstrom in eine Freistrahlrichtung und andererseits des Tragwirbels der Ansaugluftstrom in eine Ansaugrichtung, wobei die Freistrahlrichtung und die Ansaugrichtung jeweils tangential zu dem Tragwirbel vorliegen und in unterschiedliche Richtungen weisen, insbesondere einander entgegengesetzt sind. Der Tragwirbel wird also zumindest durch den Freistrahlluftstrom ausgebildet. Zusätzlich kann (optional) der Ansaugluftstrom zur Ausbildung des Tragwirbels beitragen. Der Tragwirbel liegt bevorzugt zumindest bereichsweise unter der ersten Profilfläche vor, also insbesondere zwischen der ersten Profilfläche und dem Boden beziehungsweise Erdboden.

Das Abreißen des Luftfilms von der zweiten Profilfläche erfolgt im Schnitt gesehen an einer Abrissstelle. Diese kann der Tragflächenübergangsstelle entsprechen oder aber von dieser beabstandet sein. Im Schnitt bezogen auf einen Abstand der Tragflächeninnenseite oder des Luftaustrittsspalts von der Tragflächenübergangsstelle entlang der zweiten Profilfläche beträgt der Abstand zwischen der Tragflächeninnenseite oder dem Luftaustrittsspalt einerseits und der Abrisstelle andererseits, wiederum entlang der zweiten Profilfläche, mindestens 50 %, mindestens 60 %, mindestens 70 %, mindestens 80 % oder mindestens 90 %. Besonders bevorzugt strömt der Luftfilm bis zu der Tragflächenübergangsstelle entlang der zweiten Profilfläche.

Der auf den Flugkörper wirkende Auftrieb wird durch unterschiedliche Wirkmechanismen erzielt. Zum einen liegt aufgrund des Ausbringens der Luft aus dem Luftaustrittsspalt der Luftfilm auf der Oberseite der Tragfläche vor, welcher aufgrund seiner hohen Strömungsgeschwindigkeit nach der Bernoulli-Gleichung einen Unterdruck gegenüber der Unterseite der Tragfläche bewirkt. Da nämlich die Strömungsgeschwindigkeit der Luft auf Seiten der zweiten Profilfläche größer ist als die Strömungsgeschwindigkeit der Luft auf Seiten der ersten Profilfläche, ist der auf Seiten der zweiten Profilfläche vorliegende Druck kleiner als der auf Seiten der ersten Profilfläche vorliegende Druck. Die Druckdifferenz zwischen den Drücken seitens der ersten Profilfläche und seitens der zweiten Profilfläche, also die Druckdifferenz zwischen der Unterseite und der Oberseite der Tragfläche, bewirkt bereits einen Teil des auf den Flugkörper wirkenden Auftriebs. Ein weiterer Teil des Auftriebs wird durch den Tragwirbel bereitgestellt, sobald dieser vorliegt. Es ist einsichtig, dass der Tragwirbel erst dann ausgebildet werden kann, wenn ein hinreichender Abstand des Flugkörpers von dem Boden vorliegt. Um den von dem Tragwirbel erzeugten Auftrieb zu nutzen, ist es also zunächst notwendig, den Flugkörper von dem Boden zu beabstanden. Vorzugsweise erfolgt dies mithilfe einer mechanischen Hebevorrichtung, welche den Flugkörper gegenüber dem Boden anhebt.

Die Verwendung des Tragwirbels zum zumindest teilweisen Bereitstellen des Auftriebs ermöglicht ein besonders energieeffizientes Betreiben des Flugkörpers, weil das Erzeugen und Erhalten des Tragwirbels mit einem vergleichsweise geringen Energieaufwand möglich ist, der deutlich geringer ist als der Energieaufwand, welcher zum unmittelbaren Anheben des Flugkörpers notwendig wäre. Der Tragwirbel hat zudem eine besonders hohe Stabilität des Flugkörpers in der Luft zur Folge, weil der Tragwirbel ein großes Luftvolumen einnimmt beziehungsweise ein voluminöses Luftpolster für den Flugkörper schafft. Die Tragfläche und insoweit der Flugkörper sind hinsichtlich der Tragfähigkeit beliebig skalierbar, weil auch der Tragwirbel grundsätzlich beliebig skalierbar ist. Der Tragwirbel wird nämlich nach Art eines Potentialwirbels ausgebildet.

Die Tragfläche ist vorzugsweise im Schnitt gesehen symmetrisch, beispielsweise sogar rotationssymmetrisch. Grundsätzlich können zwei unterschiedliche Ausgestaltungen der Tragfläche unterschieden werden. Gemäß einer ersten Ausgestaltung ist die Tragfläche gerade und hierbei im Schnitt gesehen bezüglich einer Symmetrieachse symmetrisch ausgestaltet. Die Symmetrieachse wird im Rahmen dieser Beschreibung auch als Längsmittelachse bezeichnet. Die Symmetrieachse verläuft im Schnitt vorzugsweise mittig durch die Lufteinlassöffnung und die Luftauslassöffnung. Die erste Profilfläche und die zweite Profilfläche erstrecken sich also ausgehend von der Tragflächenübergangsstelle in Richtung der Symmetrieachse bis hin zu der Tragflächeninnenseite, welche vorzugsweise die Lufteinlassöffnung und/oder die Luftauslassöffnung begrenzt. Auf der gegenüberliegenden Seite der Symmetrieachse erstrecken sich die erste Profilfläche und die zweite Profilfläche wiederum von einer (weiteren) Tragflächeninnenseite bis hin zu einer (weiteren) Tragflächenübergangsstelle, an welcher sie wiederum zusammenlaufen. Die Tragflächenübergangsstellen verlaufen insoweit voneinander beabstandet, insbesondere parallel voneinander beabstandet. Sie verlaufen vorzugsweise jeweils gerade. Der Flugkörper ist im Schnitt gesehen bezüglich der Lufteinlassöffnung und/oder der Luftauslassöffnung oder bezüglich der mittig durch die Lufteinlassöffnung und/oder die Luftauslassöffnung verlaufenden Symmetrieachse symmetrisch. Bei einer solchen Ausgestaltung ist der Tragwirbel walzenförmig.

Bevorzugt wird jedoch eine zweite Ausgestaltung des Flugkörpers, gemäß welcher die Tragfläche rund oder oval ist, sodass der Flugkörper beispielsweise nach Art einer Flugscheibe ausgestaltet ist. Die runde Tragfläche ist vorzugsweise rotationssymmetrisch bezüglich der Längsmittelachse, wobei die Längsmittelachse im Schnitt gesehen eine Spiegelachse der Tragfläche darstellt. Die Tragflächenübergangsstelle ist vorzugsweise in Umfangsrichtung bezüglich der Längsmittelachse durchgehend ausgebildet. Die Tragflächenübergangsstelle weist bevorzugt in Umfangsrichtung eine durchgehend konstante Krümmung auf, sodass die Tragflächenübergangsstelle schlussendlich kreisförmig verläuft. Die Tragfläche ist insoweit bezüglich der Längsmittelachse ringförmig. Im Falle der zweiten Ausführungsform des Flugkörpers ist der Tragwirbel torusförmig, wobei der Torus als Rotationskörper eines Kreises zu verstehen ist, insbesondere als Rotationskörper um die Längsmittelachse der Tragfläche. Eine solche in Umfangsrichtung geschlossene Ausbildung des Tragwirbels ermöglicht einen besonders energieeffizienten Flugbetrieb des Flugkörpers.

Die Luftauslassöffnung und - bevorzugt - die Tragfläche werden zumindest bereichsweise von dem Umlenkelement übergriffen, insbesondere im Schnitt gesehen. Das Umlenkelement erstreckt sich beispielsweise in radialer Richtung bezüglich der Längsmittelachse der Tragfläche in radialer Richtung nach außen, nämlich insbesondere ausgehend von der der Längsmittelachse. In einer ersten Variante des Umlenkelements übergreift das Umlenkelement die Tragfläche in radialer Richtung über wenigstens 5 %, wenigstens 10 %, wenigstens 15 % oder wenigstens 20 % und insoweit lediglich teilweise und weniger als 50 %. In einer zweiten Variante übergreift es die Tragfläche über wenigstens 50 %, wenigstens 60 %, wenigstens 70 %, wenigstens 80 % oder wenigstens 90 % und somit nur teilweise, aber größtenteils. In einer dritten Variante, die eine besonders effiziente Bereitstellung der den Auftrieb bewirkenden Luft ermöglicht, übergreift das Umlenkelement die Tragfläche in radialer Richtung ausgehend von der Längsmittelachse vollständig, insbesondere ragt es in radialer Richtung über die Tragfläche hinaus. Beispielsweise ist das Umlenkelement hierbei derart ausgestaltet, dass der Luftaustrittsspalt von der Tragflächenübergangsstelle oder der Abrissstelle begrenzt ist. Der Luftaustrittsspalt umgreift zum Beispiel die Tragfläche im Schnitt gesehen außenseitig und liegt als Ringspalt zwischen dem Umlenkelement und der Tragfläche vor. Der Luftaustrittsspalt liegt in diesem Fall insbesondere vollständig in einer gedachten Ebene, die senkrecht auf der Längsmittelachse steht. Durch den Luftaustrittsspalt tritt insoweit die Luft in vertikaler Richtung in Richtung des Bodens aus.

Eine Weiterbildung der Erfindung sieht vor, dass die wenigstens eine Lufteinlassöffnung zentral in der ersten Profilfläche und/oder die wenigstens eine Luftauslassöffnung zentral in der zweiten Profilfläche angeordnet ist. In anderen Worten sind die Lufteinlassöffnung beziehungsweise die Luftauslassöffnung im Schnitt, insbesondere im Längsschnitt bezüglich der Längsmittelachse, mittig in der jeweiligen Profilfläche ausgebildet. Das bedeutet, dass die aus der Luftauslassöffnung während eines Flugbetriebs des Flugkörpers ausströmende Luft einen Großteil der zweiten Profilfläche oder sogar die gesamte Profilfläche überströmt, insbesondere in Form des Luftfilms. Beispielsweise überströmt die Luft im Schnitt gesehen mindestens 50 %, mindestens 60 %, mindestens 70 %, mindestens 80 % oder mindestens 90 % der zweiten Profilfläche. Weil der Luftfilm während seines Überströmens der zweiten Profilfläche Umgebungsluft aufnimmt beziehungsweise mitnimmt, insbesondere durch die aufgrund seiner im Vergleich mit der Umgebungsluft höheren Strömungsgeschwindigkeit vorliegenden Saugwirkung, vergrößert sich der Massenstrom des Luftfilms während seines Überströmens der zweiten Profilfläche. Das bedeutet, dass der Freistrahlluftstrom, welcher schlussendlich den Tragwirbel erzeugt, zumindest zeitweise einen größeren Massenstrom aufweist als der Luftfilm unmittelbar bei seinem Austreten aus der Luftauslassöffnung beziehungsweise dem Luftaustrittsspalt. Hierdurch wird die Energieeffizienz des Flugkörpers nochmals verbessert.

Eine Weiterbildung der Erfindung sieht vor, dass die Tragfläche bezüglich einer Längsmittelachse ringförmig ist und die Profilflächen im Längsschnitt gesehen in axialer Richtung bereichsweise voneinander beabstandet sind. Dies betrifft insbesondere die vorstehend bereits erwähnte zweite Ausführungsform des Flugkörpers. Gemäß dieser ist die Tragfläche ringförmig und bezüglich der Längsmittelachse bevorzugt rotationssymmetrisch. Im Längsschnitt bezüglich der Längsmittelachse gesehen sind die Profilflächen bereichsweise in axialer Richtung voneinander beabstandet, nämlich abseits der Tragflächenübergangsstelle, an welcher sie zusammenlaufen. Mit dieser Ausgestaltung des Flugkörpers wird der bereits erwähnte besonders energieeffiziente Flugbetrieb ermöglicht.

Eine Weiterbildung der Erfindung sieht vor, dass die wenigstens eine Lufteinlassöffnung und die wenigstens eine Luftauslassöffnung über einen im Schnitt zentral in der Tragfläche ausgebildeten Strömungskanal strömungstechnisch verbunden sind, wobei in dem Strömungskanal ein Mantelpropeller der Luftfördereinrichtung um eine Drehachse drehbar angeordnet ist. Unter dem Schnitt ist wiederum bevorzugt der Längsschnitt bezüglich der Längsmittelachse der Tragfläche zu verstehen. Der die Lufteinlassöffnung und die Luftauslassöffnung strömungstechnisch miteinander verbindende Strömungskanal weist bevorzugt durchgehend einen konstanten Durchströmungsquerschnitt beziehungsweise eine konstante Durchströmungsquerschnittsfläche auf. Das bedeutet schlussendlich, dass die Lufteinlassöffnung und die Luftauslassöffnung über dieselbe Durchströmungsquerschnittsfläche verfügen.

Die Lufteinlassöffnung ist in Umfangsrichtung bezüglich der Längsmittelachse durchgehend von der ersten Profilfläche begrenzt, sodass die erste Profilfläche an der Tragflächeninnenseite einen Rand der Lufteinlassöffnung ausbildet. Analog hierzu umgreift die zweite Profilfläche in Umfangsrichtung durchgehend die Luftauslassöffnung, sodass die zweite Profilfläche an der Tragflächeninnenseite einen Rand der Luftauslassöffnung ausbildet. Der Rand der Lufteinlassöffnung liegt bevorzugt durchgehend in einer gedachten ersten Ebene, wohingegen der Rand der Luftauslassöffnung bevorzugt durchgehend in einer gedachten zweiten Ebene liegt. Die beiden gedachten Ebenen sind insbesondere parallel zueinander angeordnet und stehen bevorzugt jeweils senkrecht auf der Längsmittelachse. Entsprechend sind eine Normalenrichtung der Lufteinlassöffnung und eine Normalenrichtung der Luftauslassöffnung parallel zu der Längsmittelachse angeordnet oder fallen mit dieser zusammen.

In dem Strömungskanal ist der Mantelpropeller der Luftfördereinrichtung angeordnet und drehbar gelagert. Der Mantelpropeller ist dazu vorgesehen und ausgebildet, während des Flugbetriebs des Flugkörpers die Luft durch die Lufteinlassöffnung anzusaugen und in Richtung der Luftauslassöffnung zu fördern, sodass die durch die Lufteinlassöffnung angesaugte Luft nachfolgend aus der Luftauslassöffnung austritt. Der Mantelpropeller stellt ein Laufrad der Luftfördereinrichtung dar, welches als Axiallaufrad ausgestaltet ist. Zusätzlich zu dem Mantelpropeller kann die Luftfördereinrichtung über ein Leitrad verfügen, welches stromabwärts des Mantelpropellers angeordnet ist und einer Ausrichtung der es durchströmenden Luft parallel zu der Längsmittelachse dient. Der Mantelpropeller ist insgesamt derart angeordnet, dass er zum einen äußerst effizient arbeitet, weil Strömungsverluste an Blattspitzen des Mantelpropellers verringert werden, und zum anderen vor Beschädigungen zuverlässig geschützt ist.

Eine Weiterbildung der Erfindung sieht vor, dass die Luftauslassöffnung mit dem Luftaustrittsspalt über einen Verbindungskanal strömungstechnisch verbunden ist, der im Schnitt gesehen zwischen der zweiten Profilfläche und dem Umlenkelement vorliegt. Der Verbindungskanal ist im Schnitt, insbesondere im Längsschnitt bezüglich der Längsmittelachse, einerseits von der zweiten Profilfläche und andererseits von dem Umlenkelement begrenzt, also auf gegenüberliegenden Seiten. Der Verbindungskanal verläuft vorzugsweise bezüglich des vorstehend erwähnten Strömungskanals angewinkelt, sodass eine Hauptströmungsrichtung der den Verbindungskanal durchströmenden Luft bezüglich einer Hauptströmungsrichtung der den Strömungskanal durchströmenden Luft angewinkelt ist, also einen Winkel einschließt, der größer als 0° und kleiner als 180° ist. Bevorzugt beträgt der Winkel mindestens 45° und höchstens 135°, mindestens 60° und höchstens 120°, mindestens 70° und höchstens 110°, mindestens 80° und höchstens 100° oder in etwa oder genau 90°.

Der Verbindungskanal ist bevorzugt ebenso wie der Luftaustrittsspalt in Umfangsrichtung bezüglich der Längsmittelachse durchgehend und insbesondere unterbrechungsfrei ausgebildet, sodass der Luftfilm auf der zweiten Profilfläche ebenfalls durchgehend und unterbrechungsfrei ausgebildet wird. Hierdurch wird der Tragwirbel besonders effizient erzeugt. Selbstredend können jedoch dünne Stege vorliegen, mittels welchen das Umlenkelement mit der Tragfläche verbunden ist. Aus strömungstechnischer Sicht sind diese Stege derart ausgestaltet, dass dennoch von dem unterbrechungsfreien Verbindungskanal und dem unterbrechungsfreien Luftaustrittsspalt ausgegangen werden kann.

Eine Weiterbildung der Erfindung sieht vor, dass der Verbindungskanal einen sich in Richtung des Luftaustrittsspalts vergrößernden oder verkleinernden Querschnitt aufweist, sodass er nach Art einer Düse ausgestaltet ist. In Abhängigkeit von der Strömungsgeschwindigkeit der Luft in dem Strömungskanal kann der Verbindungskanal sich in Richtung des Luftaustrittsspalts entweder erweitern oder verjüngen. Die Gestalt des Verbindungskanals wird insbesondere derart gewählt, dass die Luft in dem Luftaustrittsspalt beziehungsweise der Luftfilm unmittelbar nach seinem Austreten durch den Luftaustrittsspalt eine gewünschte Strömungsgeschwindigkeit aufweist. Diese Strömungsgeschwindigkeit liegt bevorzugt im Unterschallbereich, sodass keine negativen mechanischen Einflüsse auf den Flugkörper durch strömungstechnische Stöße oder dergleichen zu erwarten sind. Die Ausgestaltung des Verbindungskanals nach Art einer Düse ermöglicht einen effektiven Betrieb des Flugkörpers.

Eine Weiterbildung der Erfindung sieht vor, dass der Luftaustrittsspalt durchgehend ausgebildet ist, insbesondere in Umfangsrichtung bezüglich der Längsmittelachse. Hierauf wurde vorstehend bereits hingewiesen. Eine solche Ausgestaltung ermöglicht eine gleichmäßige Erzeugung des Luftfilms und entsprechend ein besonders effizientes Anregen des Tragwirbels.

Eine Weiterbildung der Erfindung sieht vor, dass die zweite Profilfläche einen von der Tragflächenübergangsstelle ausgehenden ersten Bereich und einen sich an den ersten Bereich anschließenden und den Luftaustrittsspalt begrenzenden zweiten Bereich aufweist, wobei - im Schnitt gesehen - der erste Bereich gekrümmt ist, insbesondere durchgehend, und der zweite Bereich gekrümmt oder plan ist. Die zweite Profilfläche weist also den ersten Bereich und den zweiten Bereich auf, insbesondere setzt sie sich ausschließlich aus dem ersten Bereich und dem zweiten Bereich zusammen. Bevorzugt sind der erste Bereich und der zweite Bereich jeweils ringförmig ausgestaltet, wobei der erste Bereich den zweiten Bereich in Umfangsrichtung bezüglich der Längsmittelachse umgreift. Der erste Bereich schließt sich unmittelbar an den zweiten Bereich an, insbesondere geht der erste Bereich nahtlos und stetig in den zweiten Bereich über.

Im Schnitt, insbesondere im Längsschnitt bezüglich der Längsmittelachse gesehen, ist der erste Bereich der zweiten Profilfläche gekrümmt, nämlich in radialer Richtung bezüglich der Längsmittelachse nach außen von dem Umlenkelement fort. Das bedeutet, dass der Abstand in axialer Richtung zwischen der zweiten Profilfläche und dem Umlenkelement in dem ersten Bereich mit zunehmendem Abstand in radialer Richtung ebenfalls zunimmt. Besonders bevorzugt ist der erste Bereich durchgehend gekrümmt, weist also im Schnitt beziehungsweise Längsschnitt gesehen durchgehend eine von 0 verschiedene Krümmung auf.

Der zweite Bereich kann ebenfalls gekrümmt sein, beispielsweise teilweise oder durchgehend. Er kann jedoch auch durchgehend plan sein oder - alternativ - teilweise gekrümmt und teilweise plan ausgeführt sein. Beispielsweise liegt der zweite Bereich im Schnitt gesehen in Überdeckung mit dem Umlenkelement vor. In radialer Richtung abseits beziehungsweise außerhalb des Umlenkelements liegt hingegen der erste Bereich vor. Die Aufteilung der zweiten Profilfläche in den ersten Bereich und den zweiten Bereich ermöglicht eine besonders vorteilhafte Luftführung, sodass der die zweite Profilfläche überstreichende Luftfilm nach seinem Abreißen von der Tragfläche den Tragwirbel auf besonders effektive Art und Weise erzeugt.

Eine Weiterbildung der Erfindung sieht vor, dass die erste Profilfläche im Schnitt gesehen bereichsweise gegenüber der Tragflächenübergangsstelle in Richtung der zweiten Profilfläche zurückversetzt ist, sodass eine Wirbelkammer ausgebildet ist, die von der Tragflächenübergangsstelle umgriffen ist. Unter dem Schnitt ist wiederum bevorzugt der Längsschnitt bezüglich der Längsmittelachse zu verstehen. Das bereichsweise Zurückversetzen der ersten Profilfläche bezüglich der Tragflächenübergangsstelle ist beispielsweise durch eine Krümmung der ersten Profilfläche und/oder einen Rücksprung, also insbesondere die Ausbildung einer Stufe, realisiert. Im Falle der Krümmung ist ein Krümmungsradius der Krümmung bevorzugt derart gewählt, dass er größer ist als ein Radius des erzeugten Tragwirbels oder diesem in etwa oder genau entspricht.

Die Wirbelkammer ist in axialer Richtung nach oben von der ersten Profilfläche und in radialer Richtung nach außen von der Tragflächenübergangsstelle begrenzt. In radialer Richtung nach innen erstreckt sich die Wirbelkammer vorzugsweise bis hin zu der Lufteintrittsöffnung. Die Wirbelkammer dient einer bereichsweisen Aufnahme des Tragwirbels während des Flugbetriebs des Flugkörpers und bewirkt eine Stabilisierung und Positionierung des Tragwirbels, insbesondere in radialer Richtung. Aufgrund der Positionierung des Tragwirbels mithilfe der Wirbelkammer wird eine besonders effektive Erzeugung des Auftriebs erzielt.

Eine Weiterbildung der Erfindung sieht vor, dass die erste Profilfläche und die zweite Profilfläche im Schnitt gesehen zumindest bereichsweise gleichsinnig gekrümmt sind. Unter der gleichsinnigen Krümmung ist eine Krümmung mit demselben Vorzeichen zu verstehen. Hierdurch wird eine besonders material- und gewichtssparende Ausgestaltung des Flugkörpers erzielt. Beispielsweise ist es vorgesehen, dass die erste Profilfläche ausgehend von der Tragflächenübergangsstelle bis hin zu der Tragflächeninnenseite beziehungsweise bis hin zu der Lufteinlassöffnung eine durchgehend konstante Krümmung aufweist. Zusätzlich oder alternativ verfügt die erste Profilfläche über eine sich ausgehend von der Tragflächenübergangsstelle in Richtung der Tragflächeninnenseite verändernde, insbesondere abnehmende Krümmung.

Beispielsweise ist die Krümmung der ersten Profilfläche unmittelbar an der Tragflächenübergangsstelle größer als die Krümmung der zweiten Profilfläche. In Richtung der Tragflächeninnenseite verringert sich hingegen die Krümmung der ersten Profilfläche, beispielsweise bis hin zu einer Krümmung von 0. Besonders bevorzugt weist die erste Profilfläche im Schnitt beziehungsweise Längsschnitt gesehen beabstandet von der Tragflächenübergangsstelle einen geraden Verlauf auf, wobei eine diesen geraden Verlauf der ersten Profilfläche aufnehmende gedachte Ebene bevorzugt senkrecht auf der Längsmittelachse steht. Im Bereich des geraden Verlaufs begrenzt die erste Profilfläche besonders bevorzugt den Luftaustrittsspalt. Hierdurch wird eine besonders effektive Luftführung erzielt.

Eine Weiterbildung der Erfindung sieht vor, dass die zweite Profilfläche an der Tragflächenübergangsstelle unter einem Winkel in die erste Profilfläche übergeht, der bezüglich einer senkrecht auf einer die Tragflächenübergangsstelle durchgehend aufnehmenden gedachten Ebene stehenden Geraden mindestens 0° und höchstens 60° beträgt. Dies gilt insbesondere im Schnitt, vorzugsweise im Längsschnitt bezüglich der Längsmittelachse gesehen. Die gedachte Ebene soll die Tragflächenübergangsstelle durchgehend aufnehmen. Zusätzlich steht sie besonders bevorzugt senkrecht auf der Längsmittelachse. Die Gerade steht wiederum senkrecht auf der gedachten Ebene und ist insoweit bevorzugt parallel zu der Längsmittelachse der Tragfläche angeordnet.

Unmittelbar an der Tragflächenübergangsstelle schließt die zweite Profilfläche mit der Geraden den Winkel von mindestens 0° und höchstens 60° ein. Es kann also vorgesehen sein, dass die zweite Profilfläche parallel zu der Geraden in die zweite Profilfläche übergeht. Vorzugsweise ist der Winkel jedoch größer als 0°. Beispielsweise beträgt er mindestens 15° und höchstens 60°, mindestens 30° und höchstens 50° oder in etwa oder genau 0°, in etwa oder genau 30° oder in etwa oder genau 50°. In dem genannten Winkelbereich wird eine vorzeitige Ablösung des Luftfilms von der zweiten Profilfläche zuverlässig verhindert, sodass der entstehende Freistrahlluftstrom den Tragwirbel besonders effektiv ausbildet.

Eine Weiterbildung der Erfindung sieht vor, dass das Umlenkelement zur globalen und/oder lokalen Veränderung einer Strömungsquerschnittsfläche des Luftaustrittsspalts verlagerbar ist. Das Umlenkelement ist insoweit derart verlagerbar, insbesondere mittels eines Steuerantriebs, dass die Größe des Luftaustrittsspalts verändert wird, nämlich entweder global und/oder lokal. Unter der globalen Veränderung des Luftaustrittsspalts beziehungsweise der Strömungsquerschnittsfläche des Luftaustrittsspalts ist zu verstehen, dass die Größe des Luftaustrittsspalts beziehungsweise der Durchströmungsquerschnittsfläche gleichmäßig über die gesamte Erstreckung des Luftaustrittsspalts verändert, also vergrößert oder verkleinert, wird. Die lokale Veränderung bedeutet hingegen eine lediglich bereichsweise Vergrößerung oder Verkleinerung des Luftaustrittsspalts beziehungsweise der Strömungsquerschnittsfläche. Beispielsweise wird zur lokalen Veränderung das Umlenkelement derart verlagert, dass der Luftaustrittsspalt bereichsweise vergrößert und bereichsweise verkleinert wird. Durch die Veränderung der Strömungsquerschnittsfläche des Luftaustrittsspalts lässt sich eine Steuerung des Flugkörpers, insbesondere einer Flugrichtung des Flugkörpers, auf einfache Art und Weise bewerkstelligen.

Eine Weiterbildung der Erfindung sieht vor, dass zur globalen Veränderung der Strömungsquerschnittsfläche des Luftaustrittsspalts der Abstand des Umlenkelements zu der zweiten Profilfläche gleichmäßig veränderbar ist. Unter dem gleichmäßigen Verändern ist ein gleichmäßiges Vergrößern oder ein gleichmäßiges Verkleinern des Luftaustrittsspalts zu verstehen. Beispielsweise wird hierzu das Umlenkelement parallel zu der Längsmittelachse der Tragfläche verlagert, nämlich zur Vergrößerung der Luftaustrittsfläche von der zweiten Profilfläche fort und zur Verkleinerung der Strömungsquerschnittsfläche auf die zweite Profilfläche zu. Dies ermöglicht ein besonders effektives Steuern des Flugkörpers durch ein Einstellen der Wirbelintensität des Tragwirbels.

Eine Weiterbildung der Erfindung sieht vor, dass zur lokalen Veränderung der Strömungsquerschnittsfläche des Luftaustrittsspalts das Umlenkelement bezüglich der zweiten Profilfläche verkippbar ist. Durch das Verkippen des Umlenkelements wird der Luftaustrittsspalt lokal verändert, insbesondere teilweise vergrößert und teilweise verkleinert. Das Verkippen erfolgt beispielsweise bezüglich der Längsmittelachse der Tragfläche. Bevorzugt ist das Umlenkelement derart ausgestaltet, dass bei einer parallelen Ausrichtung des Umlenkelements bezüglich der Längsmittelachse und insoweit einem Winkel von 0° der Luftaustrittsspalt in Umfangsrichtung bezüglich der Längsmittelachse eine durchgehend gleichbleibende Größe aufweist. Bei einer Veränderung des Winkels tritt hingegen die lokale Veränderung der Strömungsquerschnittsfläche auf. Wiederum ermöglicht eine solche Ausgestaltung eine besonders effiziente Steuerung des Flugkörpers.

Eine Weiterbildung der Erfindung sieht vor, dass von der ersten Profilfläche erste Steuerelemente und/oder von der zweiten Profilfläche zweite Steuerelemente ausgehen, die jeweils eine Steuerfinne aufweisen. Die ersten Steuerelemente und die zweiten Steuerelemente dienen einer Steuerung des Flugkörpers, nämlich durch Beeinflussung des Luftfilms und/oder des Tragwirbels. Es kann vorgesehen sein, dass lediglich die ersten Steuerelemente, nicht jedoch die zweiten Steuerelemente, oder lediglich die zweiten Steuerelemente, nicht jedoch die ersten Steuerelemente vorliegen. Es kann jedoch auch vorgesehen sein, dass sowohl die ersten Steuerelemente als auch die zweiten Steuerelemente realisiert sind. Jedes der Steuerelemente verfügt über jeweils eine Steuerfinne, welche beispielsweise plattenartig oder tragflächenartig ausgestaltet ist. Die Steuerfinne kann in letzterem Fall bezüglich ihrer Profilsehne symmetrisch sein oder ein strömungstechnisches Profil aufweisen. Die ersten Steuerelemente, die von der ersten Profilfläche ausgehen, dienen einer direkten Beeinflussung des Tragwirbels, wohingegen die zweiten Steuerelemente, die von der zweiten Profilfläche ausgehen, einer direkten Beeinflussung des Luftfilms und mithin einer lediglich mittelbaren Beeinflussung des Tragwirbels dienen. In Abhängigkeit von einem Anstellwinkel der Steuerelemente werden der Tragwirbel und/oder der Luftfilm abgelenkt, sodass eine Steuerung des Flugkörpers auf effektive Art und Weise realisiert ist. Die Steuerelemente können zusätzlich oder alternativ zu der Verlagerbarkeit des Umlenkelements realisiert sein. Die zweiten Steuerelemente sind beispielsweise in dem zweiten Bereich der zweiten Profilfläche angeordnet oder in diesem gelagert.

Eine Weiterbildung der Erfindung sieht vor, dass die ersten Steuerelemente und/oder die zweiten Steuerelemente über ein gemeinsames Koppelelement mit einem Steuerantrieb des Flugkörpers antriebstechnisch gekoppelt sind. Der Steuerantrieb dient dem Verstellen der Steuerelemente. Er ist lediglich mittelbar über das gemeinsame Koppelelement an die Steuerelemente antriebstechnisch angebunden. Hierzu greifen einerseits die Steuerelemente und andererseits der Steuerantrieb an dem Koppelelement an. Insbesondere greift der Steuerantrieb beabstandet von den Steuerelementen an dem Koppelelement an. Hierdurch wird ein gleichzeitiges Verstellen der Steuerelemente mittels des Steuerantriebs realisiert. Auch das Umlenkelement kann zusätzlich oder alternativ an das Koppelelement angebunden sein.

Eine Weiterbildung der Erfindung sieht vor, dass das Koppelelement jeweils über ein Kugelgelenk und einen Hebelarm mit den ersten Steuerelementen und/oder den zweiten Steuerelementen und/oder dem Steuerantrieb gekoppelt ist. Jedem Steuerelement und/oder dem Steuerantrieb ist insoweit jeweils ein Kugelelement und ein Hebelarm zugeordnet, mittels welchem sie mit dem Steuerantrieb antriebstechnisch verbunden sind. Die Verwendung des Kugelgelenks stellt ein äußerst flexibles Einstellen der Steuerelemente mittels des Steuerantriebs sicher.

Eine Weiterbildung der Erfindung sieht vor, dass das Koppelelement als Steuerring ausgebildet ist. Der Steuerring umgreift vorzugsweise die Längsmittelachse der Tragfläche in Umfangsrichtung durchgehend und vollständig. Er greift sowohl an den ersten Steuerelementen als auch an den zweiten Steuerelementen - soweit jeweils vorhanden - an, um diese mit dem Steuerantrieb zu koppelt. Der Steuerring ist derart angeordnet, dass er nicht lediglich eine Drehbewegung in Umfangsrichtung bezüglich der Längsmittelachse beschreiben kann, sondern dass er zusätzlich verkippbar ist und somit nach Art einer Taumelscheibe vorliegt. Dies ermöglicht das bereits erwähnte flexible Betätigen der Steuerelemente mittels des Steuerantriebs.

Eine Weiterbildung der Erfindung sieht vor, dass der Steuerantrieb mehrere Stellantriebe aufweist, die jeweils beabstandet voneinander mit dem Koppelement antriebstechnisch gekoppelt sind. Vorzugsweise sind die Stellantriebe gleichmäßig voneinander beabstandet, sodass also im Falle von zwei Stellantrieben diese mit einem Abstand von 180° an dem Koppelelement angreifen, im Falle von drei Stellelementen mit einem Abstand von 120° und im Falle von vier Stellelementen mit einem Abstand von 90°. Die Verwendung der mehreren Stellantriebe ermöglicht eine Verlagerung des Koppelements nicht lediglich in Umfangsrichtung bezüglich der Längsmittelachse, sondern zusätzlich in radialer Richtung, sodass das bereits beschriebene flexible Einstellen der Steuerelemente realisiert ist.

Die Erfindung betrifft weiterhin ein Verfahren zum Betreiben eines Flugkörpers gemäß Anspruch 14.

Auf die Vorteile einer derartigen Ausgestaltung des Flugkörpers beziehungsweise einer derartigen Vorgehensweise wurde bereits hingewiesen. Sowohl der Flugkörper als auch das Verfahren zu seinem Betreiben können gemäß den Ausführungen im Rahmen dieser Beschreibung weitergebildet sein, sodass insoweit auf diese verwiesen wird.

Eine Weiterbildung der Erfindung sieht vor, dass mittels der Antriebseinrichtung Luft in Form eines Ansaugluftstroms in einer Ansaugrichtung durch die Lufteintrittsöffnung angesaugt und durch den Luftaustrittsspalt in einer bezüglich der Ansaugrichtung angewinkelten Austrittsrichtung derart ausgebracht wird, dass an der Tragflächenübergangsstelle die Luft einen Freistrahlluftstrom in einer Freistrahlrichtung bildet, sodass zwischen Ansaugluftstrom und Freistrahlluftstrom ein Tragwirbel ausgebildet wird, der zumindest bereichsweise unter der ersten Profilfläche vorliegt. Auch hierauf wurde bereits eingegangen.

Die Erfindung wird nachfolgend anhand der in der Zeichnung dargestellten Ausführungsbeispiele näher erläutert, ohne dass eine Beschränkung der Erfindung erfolgt. Dabei zeigt
- Figur 1: eine schematische Darstellung einer ersten Ausführungsform eines Flugkörpers im Längsschnitt bezüglich einer Längsmittelachse,
- Figur 2: eine vereinfachte schematische Darstellung des Flugkörpers in einer zweiten Ausführungsform, sowie
- Figur 3: eine schematische Darstellung des Flugkörpers in einer dritten Ausführungsform.

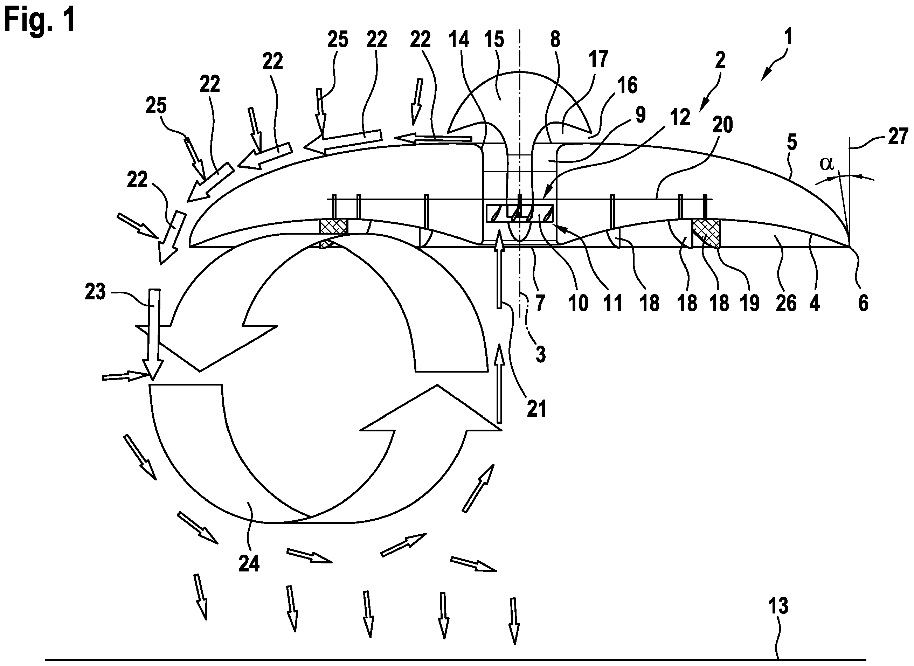

Die Figur 1 zeigt eine schematische Darstellung eines Flugkörpers 1 in einer ersten Ausführungsform, welcher zumindest eine Tragfläche 2 aufweist, die im Querschnitt bezüglich einer Längsmittelachse 3 der Tragfläche 2 rund beziehungsweise ringförmig ist. Die Tragfläche 2 wird in axialer Richtung bezüglich der Längsmittelachse 3 in einer ersten Richtung von einer ersten Profilfläche 4 und in einer zweiten Richtung von einer zweiten Profilfläche 5 begrenzt. Jede der Profilflächen 4 und 5 ist wiederum selbst ringförmig. Die beiden Profilflächen 4 und 5 laufen an einer Tragflächenübergangsstelle 6 zusammen, wobei der Übergang zwischen den Profilflächen 4 und 5 an dieser Stelle im Schnitt gesehen vorzugsweise unstetig ist. Die Profilflächen 4 und 5 bilden also bevorzugt an der Tragflächenübergangsstelle 6 gemeinsam eine Kante aus. Die Tragflächenübergangsstelle 6 liegt hierzu beispielsweise in Form eines geometrischen Kreises vor, in welchen die erste Profilfläche 4 unter einem ersten Winkel und die zweite Profilfläche 5 unter einem von dem ersten Winkel verschiedenen zweiten Winkel einmündet.

Die erste Profilfläche 4 fasst eine Lufteinlassöffnung 7 und die zweite Profilfläche 5 eine Luftauslassöffnung 8 ein. Die Lufteinlassöffnung 7 und die Luftauslassöffnung 8 sind über einen Strömungskanal 9 strömungstechnisch miteinander verbunden, wobei in dem Strömungskanal 9 ein Mantelpropeller 10 einer Luftfördereinrichtung 11 drehbar gelagert angeordnet ist. Die Luftfördereinrichtung 11 ist Bestandteil einer Antriebseinrichtung 12 des Flugkörpers 1. Es ist deutlich zu erkennen, dass die erste Profilfläche 4 auf einer einem Boden 13 zugewandten Seite des Flugkörpers 1 vorliegt, wohingegen die zweite Profilfläche 5 dem Boden 13 abgewandt ist. Der Flugkörper 1 ist hier während eines normalen und bestimmungsgemäßen Flugbetriebs dargestellt.

Die Lufteinlassöffnung 7 und die Luftauslassöffnung 8 liegen mittig bezüglich der Längsmittelachse 3 vor und werden von der ersten Profilfläche 4 beziehungsweise der zweiten Profilfläche 5 auf einer in radialer Richtung innen liegenden Tragflächeninnenseite 14 von diesen eingefasst. Der Strömungskanal 9, welcher die Lufteinlassöffnung 7 und die Luftauslassöffnung 8 strömungstechnisch miteinander verbindet, liegt beispielsweise in Form eines Zylinders, insbesondere eines Kreiszylinders und besonders bevorzugt in Form eines geraden Kreiszylinders, vor. Besonders bevorzugt weisen die Lufteinlassöffnung 7 und die Luftauslassöffnung 8 denselben Durchströmungsquerschnitt auf. Die Lufteinlassöffnung 7 ist an einer Unterseite und die Luftauslassöffnung 8 an einer Oberseite des Flugkörpers 1 angeordnet. Die Luftauslassöffnung 8 ist zumindest bereichsweise, in dem hier dargestellten Ausführungsbeispiel vollständig, von einem Umlenkelement 15 übergriffen, welches gemeinsam mit der zweiten Profilfläche 5 einen Luftaustrittsspalt 16 begrenzt. Der Luftaustrittsspalt 16 liegt also im Längsschnitt gesehen zwischen dem Umlenkelement 15 und der zweiten Profilfläche 5 vor.

Der Luftaustrittsspalt 16 ist über einen Verbindungskanal 17 strömungstechnisch mit der Luftauslassöffnung 8 verbunden, wobei der Verbindungskanal 17 ebenfalls von dem Umlenkelement 15 und der zweiten Profilfläche 5 zumindest bereichsweise begrenzt ist. Sowohl der Luftaustrittsspalt 16 als auch der Verbindungskanal 17 sind in dem hier dargestellten Ausführungsbeispiel in Umfangsrichtung bezüglich der Längsmittelachse 3 durchgehend ausgebildet und umgreifen die Längsmittelachse 3 jeweils vollständig. Gemäß dem dargestellten Ausführungsbeispiel verkleinert sich ein Durchströmungsquerschnitt des Verbindungskanals 17 in Richtung des Luftaustrittsspalts 16, sodass der Verbindungskanal 17 nach Art einer Düse vorliegt und der Luftaustrittsspalt 16 eine Mündungsöffnung dieser Düse darstellt.

Das Umlenkelement 15 ist derart verlagerbar, dass eine Strömungsquerschnittsfläche des Luftaustrittspalts 16 lokal und/oder global veränderbar ist. Hierzu ist das Umlenkelement 15 beispielsweise mit einem hier nicht dargestellten Steuerantrieb des Flugkörpers 1 antriebstechnisch gekoppelt. Zusätzlich oder alternativ sind mehrere erste Steuerelemente 18 antriebstechnisch mit dem Steuerantrieb verbunden. Zusätzlich oder alternativ zu den ersten Steuerelementen 18 können hier nicht dargestellte zweite Steuerelemente vorliegen. Die ersten Steuerelemente 18 gehen von der ersten Profilfläche 4 aus; die zweiten Steuerelemente von der zweiten Profilfläche 5. Die Steuerelemente 18 verfügen jeweils über eine Steuerfinne 19 und sind jeweils über einen hier nicht dargestellten Hebelarm und ein ebenfalls nicht dargestelltes Kugelgelenk mit einem Koppelelement 20 antriebstechnisch verbunden, welches beispielsweise als Steuerring vorliegt. Das Koppelelement 20 dient der antriebstechnischen Anbindung der Steuerelemente 18 an den Steuerantrieb, insbesondere an mehrere Stellantriebe des Steuerantriebs, welche hier nicht dargestellt sind.

Bei einem Flugbetrieb des Flugkörpers 1 wird die Antriebseinrichtung 12 derart betrieben, dass Luft von der Unterseite des Flugkörpers 1 in Richtung seiner Oberseite gefördert wird beziehungsweise derart, dass Luft in Form eines Ansaugluftstroms 21 in einer Ansaugrichtung durch die Lufteinlassöffnung 7 angesaugt und durch den Strömungskanal 9 in Richtung der Luftauslassöffnung 8 gefördert wird. Die geförderte Luft wird durch die Luftauslassöffnung 8 ausgebracht und durch den Verbindungskanal 17 dem Luftaustrittsspalt 16 zugeführt. Durch den Luftaustrittsspalt 16 wird die Luft in einer Austrittsrichtung in Form eines Luftfilms 22 derart ausgebracht, dass der Luftfilm 22 an der zweiten Profilfläche 5 anliegt. Hierzu wird der Luftfilm 22 vorzugsweise an dem Luftaustrittsspalt 16 parallel zu der zweiten Profilfläche 5 ausgebracht.

Aufgrund des Coandä-Effekts läuft der Luftfilm 22 entlang der zweiten Profilfläche 5 bis zu der Tragflächenübergangsstelle 6. Dort löst sich der Luftfilm 22 von der Tragfläche 2 und strömt als Freistrahlluftstrom 23 wiederum auf die Unterseite des Flugkörpers 1, nämlich in einer Freistrahlrichtung. Hierbei regt der Freistrahlluftstrom 23 einen Tragwirbel 24 an, der zumindest einen Teil des Auftriebs für den Flugkörper 1 bereitstellt. Verstärkt wird der Tragwirbel 24 durch den Ansaugluftstrom 21. Es ist erkennbar, dass sowohl der Freistrahlluftstrom 23 als auch der Ansaugluftstrom 21 jeweils tangential zu dem Tragwirbel 24 vorliegen. Aufgrund der ringförmigen Gestalt der Tragfläche 2 weist der ausgebildete Tragwirbel 24 eine torusförmige Gestalt auf. Der Übersicht wegen ist der Tragwirbel 24 lediglich auf einer Seite der Tragfläche 2 dargestellt. Selbstverständlich umgreift der Tragwirbel 24 jedoch die Längsmittelachse 3 in Umfangsrichtung vorzugsweise vollständig und durchgehend. Aufgrund der hohen Geschwindigkeit des Luftfilms 22 bewirkt dieser auf die umgebende Luft eine Sogwirkung. Das bedeutet, dass dem Luftfilm 22 bei seinem Überströmen der zweiten Profilfläche 5 weitere Luft zugeführt wird. Dies ist durch die Pfeile 25 angedeutet.

Um eine präzise Positionierung des Tragwirbels 24 unterhalb der Tragfläche 2 zu erzielen, ist an der Tragfläche 2 eine Wirbelkammer 26 ausgebildet, die in radialer Richtung nach außen von der Tragflächenübergangsstelle 6 begrenzt ist. Die Wirbelkammer 26 ist beispielsweise durch eine Krümmung oder einen Rücksprung der ersten Profilfläche 4 ausgebildet. Um eine besonders vorteilhafte Umströmung der zweiten Profilfläche 5 durch den Luftfilm 22 zu realisieren, geht die zweite Profilfläche 5 an der Tragflächenübergangsstelle 6 unter einem Winkel α in die erste Profilfläche 4 über, der bezüglich einer Geraden 27 bestimmt wird, welche parallel zu der Längsmittelachse 3 durch die Tragflächenübergangsstelle 6 verläuft. Die Gerade 27 steht insbesondere senkrecht auf einer gedachten Geraden, welche die Tragflächenübergangsstelle 6 durchgehend aufnimmt.

Es sei darauf hingewiesen, dass die hier beschriebene Ausgestaltung der Tragfläche 2 als ringförmige Tragfläche 2 lediglich ein vorteilhaftes Ausführungsbeispiel darstellt. Die Tragfläche 2 kann auch grundsätzlich gerade sein und hierbei beispielsweise den dargestellten Querschnitt aufweisen. Auch bei einer solchen Ausgestaltung können die beschriebenen Vorteile grundsätzlich erzielt werden.

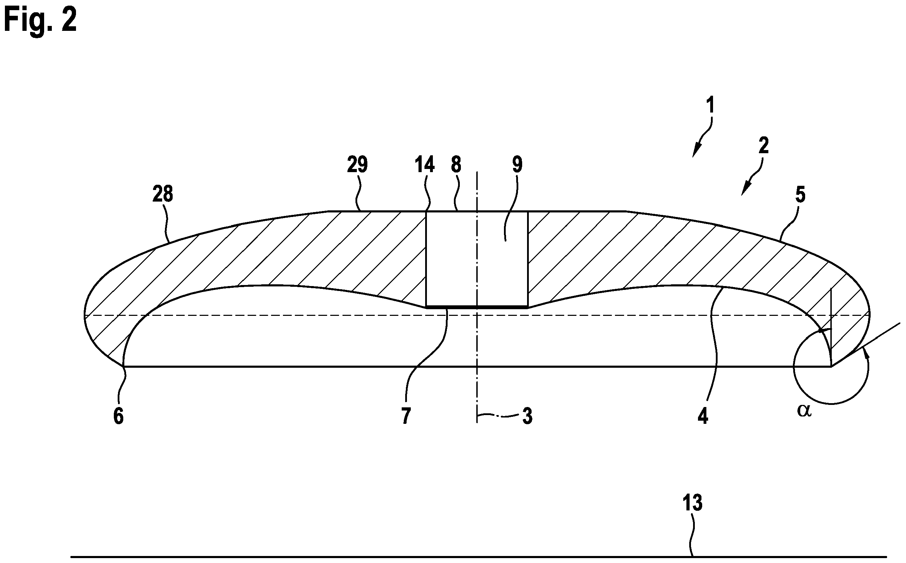

Die Figur 2 zeigt schematisch und vereinfacht eine zweite Ausführungsform des Flugkörpers 1, wobei einige Elemente aus Gründen der Übersichtlichkeit nicht dargestellt sind. Grundsätzlich entspricht die zweite Ausführungsform der ersten Ausführungsform, sodass auf die entsprechenden Ausführungen hingewiesen und nachfolgend lediglich auf die Unterschiede eingegangen wird. Diese liegen zum einen darin, dass der Winkel α negativ beziehungsweise größer als 180° ist. Beispielsweise beträgt der Winkel α mindestens 270° und ist kleiner als 360°. Alternativ beträgt er mindestens 300° und höchstens 345° oder höchstens 330°. Das bedeutet, dass die zweite Profilfläche 5 sich ausgehend von einer Tragflächenaußenseite, an welcher sie den größten Abstand von der Längsmittelachse 3 aufweist, wieder der Längsmittelachse 3 annähert, bevor sie an der Tragflächenübergangsstelle 6 in die erste Profilfläche 4 übergeht.

Ein weiterer Unterschied liegt darin, dass die Lufteinlassöffnung 7 in axialer Richtung bezüglich der Längsmittelachse 3 deutlich von einer gedachten Ebene beabstandet ist, die die Tragflächenübergangsstelle 6 durchgehend aufnimmt. Beispielsweise beträgt der Abstand mindestens 20 %, mindestens 30 %, mindestens 40 % oder mindestens 50 % eines axialen Abstands zwischen der Ebene und einer im Schnitt gesehen in axialer Richtung am weitesten von der Ebene entfernten Stelle der zweiten Profilfläche 5 oder der Luftauslassöffnung. Hierdurch ist die Lufteinlassöffnung 7 um den entsprechenden Abstand von der Ebene entfernt angeordnet, sodass die Ausbildung des Tragwirbels erleichtert wird.

Noch ein Unterschied ist darin zu sehen, dass die zweite Profilfläche 5 nicht durchgehend gekrümmt ist, sondern sich aus einem ersten Bereich 28 und einem zweiten Bereich 29 zusammensetzt. Der erste Bereich 28 erstreckt sich im Schnitt gesehen ausgehend von der Tragflächenübergangsstelle 6 bis unmittelbar zu dem zweiten Bereich 29. Er ist bevorzugt im Schnitt gesehen durchgehend gekrümmt. Der zweite Bereich 29 ist hingegen im Schnitt gesehen plan oder weist eine von dem ersten Bereich 28 verschiedene Krümmung auf. Beispielsweise ist der Übergang zwischen dem ersten Bereich 28 und dem zweiten Bereich 29 im Schnitt gesehen unstetig. Er kann alternativ jedoch auch stetig ausgebildet sein.

Es sei darauf hingewiesen, dass jeder der genannten Unterschiede für sich genommen auf die erste Ausführungsform anwendbar ist. Es ist also nicht notwendig, dass die Unterschiede stets in Kombination miteinander auftreten.

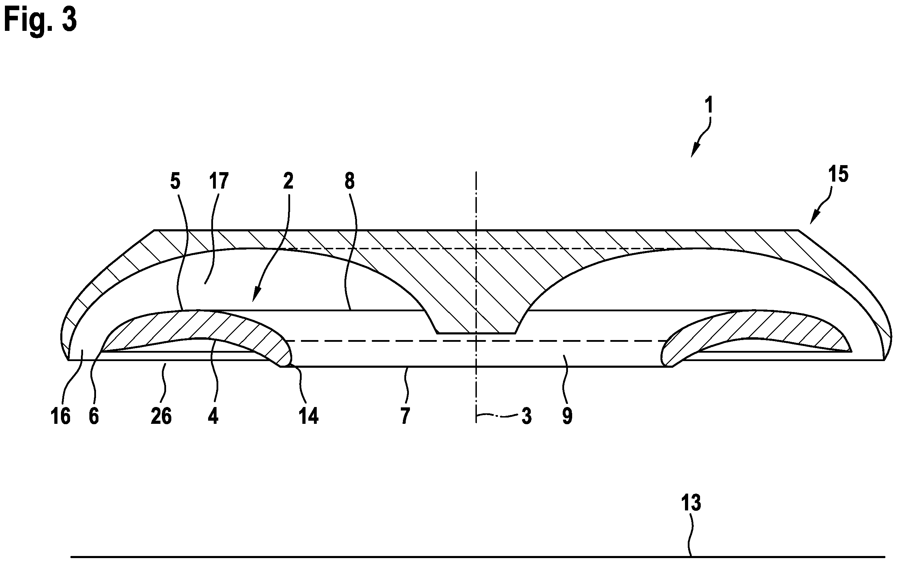

Die Figur 3 zeigt eine schematische Darstellung des Fluidkörpers 1 in einer dritten Ausführungsform. Grundsätzlich wird erneut auf die vorstehenden Ausführungen verwiesen und nachfolgend lediglich auf den Unterschied zu der ersten Ausführungsform und der zweiten Ausführungsform eingegangen. Der Unterschied liegt im Wesentlichen darin, dass das Umlenkelement 15 die Tragfläche 2 im Schnitt gesehen vollständig übergreift, sodass es sich ausgehend von der Längsmittelachse 3 der Tragfläche 2 in radialer Richtung bis über die Tragflächenaußenseite hinaus erstreckt. Die Lufteinlassöffnung 7 und die Luftauslassöffnung 8 liegen bevorzugt in zueinander parallel beabstandeten gedachten Ebenen, die senkrecht auf der Längsmittelachse 3 stehen und von gegenüberliegenden Seiten an der Tragfläche 2 anliegen. Die Ebene, in welcher die Lufteinlassöffnung 7 vorliegt, ist insoweit an einer Unterseite und die Ebene, in welcher die Luftauslassöffnung 8 vorliegt, an einer Oberseite der Tragfläche 2 angeordnet.

Der Luftaustrittsspalt 16 liegt als Ringspalt vor und ist vollständig in einer gedachten Ebene aufgenommen, die senkrecht auf der Längsmittelachse 3 steht. Bevorzugt liegt diese gedachte Ebene zwischen den Ebenen der Lufteinlassöffnung 7 und der Luftauslassöffnung 8, insbesondere näher an ersterer. Sie kann jedoch auch auf der der Luftauslassöffnung 8 abgewandten Seite der Lufteinlassöffnung vorliegen. Die beschriebene Ausgestaltung ermöglicht eine besonders effektive Führung der Luft von der Auslassöffnung 8 bis hin zu dem Luftaustrittsspalt 16, insbesondere ohne Ausnutzung des Coanda-Effekts. Der Verbindungskanal 17, welcher die Luftaustrittsöffnung 8 und den Luftaustrittsspalt 16 strömungstechnisch miteinander verbindet, weist im Schnitt gesehen einen sich zumindest abschnittsweise, insbesondere durchgehend, kontinuierlich verkleinernden Durchströmungsquerschnitt auf, wobei der Durchströmungsquerschnitt in dem Luftaustrittsspalts 16 kleiner ist als an der Luftaustrittsöffnung 8.Es kann rein optional vorgesehen sein, dass das Umlenkelement 15 mehrere Luftleitstege aufweist. Die Luftleitstege gehen von einem Grundkörper des Umlenkelements 15 aus und ragen in den Verbindungskanal 17 hinein. Die Luftleitstege erstrecken sich in radialer Richtung und sind in Umfangsrichtung bezüglich der Längsmittelachse 3 bevorzugt gleichmäßig verteilt angeordnet. Die Luftleitstege dienen einer Führung der aus der Luftaustrittsöffnung 8 in den Verbindungskanal 17 eintretenden Luft. Sie verringern einen Drall der Luft, welchen diese möglicherweise aufgrund der hier nicht dargestellten Luftfördereinrichtung 11 aufweist. Die Luftfördereinrichtung 11 ist im Übrigen in der hier dargestellten Ausführungsform bevorzugt an dem Umlenkelement 15 befestigt und insbesondere lediglich über dieses an der Tragfläche 2 befestigt.

Das Steuern des Flugkörpers 1 erfolgt auch in der dritten Ausführungsform bevorzugt mit den hier nicht dargestellten ersten Steuerelementen 18 und/oder den zweiten Steuerelementen. Die ersten Steuerelemente 18 und die zweiten Steuerelemente können gemäß den vorstehenden Ausführungen ausgestaltet sein. Im Falle der zweiten Steuerelemente kann besonders bevorzugt eine Lagerung sowohl an der Tragfläche 2 als auch an dem Umlenkelement 15 realisiert sein. Die zweiten Steuerelemente sind also einerseits an der Tragfläche 2 und andererseits an dem Umlenkelement 15 drehbar gelagert. Alternativ kann eine Lagerung jedoch auch nur an der Tragfläche 2 oder dem Umlenkelement 15 erfolgen, sodass das Steuerelement beziehungsweise eine zur Lagerung des Steuerelement dienende Welle von dem Umlenkelement 15 oder der Tragfläche 2 beabstandet ist.

Es kann auch rein optional vorgesehen sein, dass im Vergleich zu der ersten Ausführungsform die ersten Steuerelemente 18 und/oder die zweiten Steuerelemente entfallen. Ein Steuern des Flugkörpers 1 erfolgt beispielsweise durch ein Verlagern und/oder Verformen von Steuerelementen, die einen Teil der Tragfläche 2 bilden und von einem Grundkörper der Tragfläche 2 ausgehen. Die Steuerelemente sind an einer in radialer Richtung außenliegenden Seite des Grundkörpers an diesem angeordnet und/oder angelenkt. Durch ein Verlagern und/oder Verdrehen der Steuerelemente bezüglich des Grundkörpers kann die durch den Luftaustrittsspalt 16 austretende Luft umgelenkt und somit der Flugkörper 1 gesteuert werden. Vorzugsweise sind die Steuerelemente unabhängig voneinander verlagerbar und/oder verdrehbar. Sie können jedoch auch miteinander gekoppelt sein, sodass das Verlagern und/oder Verdrehen zum Beispiel mittels eines gemeinsamen Stellantriebs erfolgt.

Es sei darauf hingewiesen, dass die Ausführungen zu der dritten Ausführungsform auch für die erste Ausführungsform und die zweite Ausführungsform Anwendung finden können. Es kann also zum Beispiel auch vorgesehen sein, dass zwar gemäß dem beschriebenen Unterschied das Umlenkelement 15 die Tragfläche 2 vollständig übergreift, anstelle der Steuerelemente jedoch die optionalen Steuerelemente der dritten Ausführungsform vorliegen. Ebenso können selbstverständlich die Umlenkelemente vorliegen, jedoch das Umlenkelement 15 die Tragfläche 2 nur teilweise übergreifen. Die Umlenkelemente können insoweit auch im Rahmen der ersten Ausführungsform oder der zweiten Ausführungsform Anwendung finden.

Der beschriebene Flugkörper 1 hat in allen Ausführungsformen den Vorteil, dass er aufgrund der Nutzung des Tragwirbels 24 zur Bereitstellung zumindest eines Teils des Auftriebs äußerst energieeffizient arbeitet. Zudem ist eine Steuerung des Flugkörpers 1 mittels des verlagerbaren Umlenkelements 15 und/oder der Steuerelemente 18 äußerst präzise möglich. Insbesondere kann der Flugkörper 1 analog zu einem Hubschrauber in der Luft schweben. Dennoch kann er recht hohe Geschwindigkeiten erzielen, weil er im Unterschied zu dem Hubschrauber nicht durch eine maximale Strömungsgeschwindigkeit an den Blattspitzen eines Rotors begrenzt ist.

## Patentansprüche

1. Flugkörper (1), mit einer Tragfläche (2), die im Schnitt gesehen einerseits von einer bei bestimmungsgemäßem Betrieb des Flugkörpers (1) unteren, einem Erdboden (13) zugewandten ersten Profilfläche (4) und andererseits von einer oberen, an einer Tragflächenübergangsstelle (6) mit der ersten Profilfläche (4) zusammenlaufenden zweiten Profilfläche (5) begrenzt ist, wobei die erste Profilfläche (4) wenigstens eine Lufteinlassöffnung (7) und die zweite Profilfläche (5) wenigstens eine Luftauslassöffnung (8) einfasst und der Flugkörper (1) eine Antriebseinrichtung (12) mit einer Luftfördereinrichtung (11) aufweist, die zum Ansaugen von Luft durch die wenigstens eine Lufteinlassöffnung (7) und zum Ausbringen der angesaugten Luft durch die wenigstens eine Luftauslassöffnung (8) vorgesehen und ausgebildet ist, wobei die wenigstens eine Luftauslassöffnung (8) zumindest bereichsweise von einem Umlenkelement (15) übergriffen ist, das mit der zweiten Profilfläche (5) einen mit der Luftauslassöffnung (8) in Strömungsverbindung stehenden Luftaustrittspalt (16) begrenzt, **dadurch gekennzeichnet, dass** im Betrieb das Ansaugen der Luft durch die wenigstens eine Lufteinlassöffnung (7) mittels der Luftfördereinrichtung (11) von einer Unterseite des Flugkörpers (1) erfolgt, und dass die Antriebseinrichtung (12) bei einem Flugbetrieb des Flugkörpers (1) derart betreibbar ist, dass Luft in Form eines Ansaugluftstroms (21) durch die Lufteinlassöffnung (7) von der Unterseite des Flugkörpers (1) in Richtung seiner Oberseite gefördert wird und ein entlang der zweiten Profilfläche (5) strömender Luftfilm (22) sich an einer Abrissstelle von der Tragfläche (2) löst und als Freistrahlluftstrom (23) unter den Flugkörper (1) strömt, sodass ein zumindest bereichsweise zwischen der ersten Profilfläche (4) und dem Erdboden (13) vorliegender, torusförmiger Tragwirbel (23) nach Art eines Potentialwirbels angeregt wird, zu dem der Freistrahlluftstrom (23) und der Ansaugluftstrom (21) jeweils tangential vorliegen.

2. Flugkörper nach Anspruch 1, **dadurch gekennzeichnet, dass** die wenigstens eine Lufteinlassöffnung (7) zentral in der ersten Profilfläche (4) und/oder die wenigstens eine Luftauslassöffnung (8) zentral in der zweiten Profilfläche (5) angeordnet ist.

3. Flugkörper nach einem der vorhergehenden Ansprüche, **dadurch gekennzeichnet, dass** die Tragfläche (2) bezüglich einer Längsmittelachse (3) ringförmig ist und die Profilflächen (4,5) im Längsschnitt gesehen in axialer Richtung bereichsweise voneinander beabstandet sind.

4. Flugkörper nach einem der vorhergehenden Ansprüche, **dadurch gekennzeichnet, dass** die wenigstens eine Lufteinlassöffnung (7) und die wenigstens eine Luftauslassöffnung (8) über einen im Schnitt zentral in der Tragfläche (2) ausgebildeten Strömungskanal (9) strömungstechnisch verbunden sind, wobei in dem Strömungskanal (9) ein Mantelpropeller (10) der Luftfördereinrichtung (11) um eine Drehachse drehbar angeordnet ist.

5. Flugkörper nach einem der vorhergehenden Ansprüche, **dadurch gekennzeichnet, dass** die Luftauslassöffnung (8) mit dem Luftaustrittsspalt (16) über einen Verbindungskanal (17) strömungstechnisch verbunden ist, der im Schnitt gesehen zwischen der zweiten Profilfläche (5) und dem Umlenkelement (15) vorliegt.

6. Flugkörper nach einem der vorhergehenden Ansprüche, **dadurch gekennzeichnet, dass** der Verbindungskanal (17) einen sich in Richtung des Luftaustrittsspalts (16) vergrößernden oder verkleinernden Querschnitt aufweist, sodass er nach Art einer Düse ausgestaltet ist.

7. Flugkörper nach einem der vorhergehenden Ansprüche, **dadurch gekennzeichnet, dass** die zweite Profilfläche (5) einen von der Tragflächenübergangsstelle (6) ausgehenden ersten Bereich und einen sich an den ersten Bereich anschließenden und den Luftaustrittsspalt (16) begrenzenden zweiten Bereich aufweist, wobei - im Schnitt gesehen - der erste Bereich gekrümmt ist und der zweite Bereich gekrümmt oder plan ist.

8. Flugkörper nach einem der vorhergehenden Ansprüche, **dadurch gekennzeichnet, dass** die erste Profilfläche (4) im Schnitt gesehen bereichsweise gegenüber der Tragflächenübergangsstelle (6) in Richtung der zweiten Profilfläche (5) zurückversetzt ist, sodass eine Wirbelkammer (26) ausgebildet ist, die von der Tragflächenübergangsstelle (6) umgriffen ist.

9. Flugkörper nach einem der vorhergehenden Ansprüche, **dadurch gekennzeichnet, dass** die erste Profilfläche (4) und die zweite Profilfläche (5) im Schnitt gehen zumindest bereichsweise gleichsinnig gekrümmt ist.

10. Flugkörper nach einem der vorhergehenden Ansprüche, **dadurch gekennzeichnet, dass** die zweite Profilfläche (5) an der Tragflächenübergangsstelle (6) unter einem Winkel in die erste Profilfläche (4) übergeht, der bezüglich einer senkrecht auf einer die Tragflächenübergangsstelle (6) durchgehend aufnehmenden gedachten Ebene stehenden Geraden (27) mindestens 0° und höchstens 60° beträgt.

11. Flugkörper nach einem der vorhergehenden Ansprüche, **dadurch gekennzeichnet, dass** das Umlenkelement (15) zur globalen und/oder lokalen Veränderung einer Strömungsquerschnittsfläche des Luftaustrittsspalts (16) verlagerbar ist.

12. Flugkörper nach einem der vorhergehenden Ansprüche, **dadurch gekennzeichnet, dass** von der ersten Profilfläche (4) erste Steuerelemente (18) und/oder von der zweiten Profilfläche (5) zweite Steuerelemente ausgehen, die jeweils eine Steuerfinne (19) aufweisen.

13. Flugkörper nach einem der vorhergehenden Ansprüche, **dadurch gekennzeichnet, dass** die ersten Steuerelemente (18) und/oder die zweiten Steuerelemente über ein gemeinsames Koppelelement (20) mit einem Steuerantrieb des Flugkörpers (1) antriebstechnisch gekoppelt sind.

14. Verfahren zum Betreiben eines Flugkörpers (1) nach einem oder mehreren der vorhergehenden Ansprüche, **dadurch gekennzeichnet, dass** das Ansaugen der Luft durch die wenigstens eine Lufteinlassöffnung (7) mittels der Luftfördereinrichtung (11) von einer Unterseite des Flugkörpers (1) erfolgt, und dass die Antriebseinrichtung (12) bei einem Flugbetrieb des Flugkörpers (1) derart betrieben wird, dass Luft in Form eines Ansaugluftstroms (21) durch die Lufteinlassöffnung (7) von der Unterseite des Flugkörpers (1) in Richtung seiner Oberseite gefördert wird und ein entlang der zweiten Profilfläche (5) strömender Luftfilm (22) sich an einer Abrissstelle von der Tragfläche (2) löst und als Freistrahlluftstrom (23) unter den Flugkörper (1) strömt, sodass ein zumindest bereichsweise zwischen der ersten Profilfläche (4) und dem Erdboden (13) vorliegender, torusförmiger Tragwirbel (23) nach Art eines Potentialwirbels angeregt wird, zu dem der Freistrahlluftstrom (23) und der Ansaugluftstrom (21) jeweils tangential vorliegen.

15. Verfahren nach Anspruch 14, **dadurch gekennzeichnet, dass** mittels der Antriebseinrichtung (12) Luft in Form eines Ansaugluftstroms (21) in einer Ansaugrichtung durch die Lufteintrittsöffnung (7) angesaugt und durch den Luftaustrittsspalt (16) in einer bezüglich der Ansaugrichtung angewinkelten Austrittsrichtung derart ausgebracht wird, dass an der Tragflächenübergangsstelle (6) die Luft einen Freistrahlluftstrom (23) in einer Freistrahlrichtung bildet, sodass zwischen Ansaugluftstrom (21) und Freistrahlluftstrom (23) ein Tragwirbel (24) ausgebildet wird, der zumindest bereichsweise unter der ersten Profilfläche (4) vorliegt.

## Claims

1. Flying body (1), having a bearing surface (2) which, viewed in section, is delimited on the one hand by a lower first profiled surface (4) facing a ground (13) when the flying body (1) is in intended operation and on the other hand by an upper second profiled surface (5) converging with the first profiled surface (4) at a bearing surface transition point (6), wherein the first profiled surface (4) comprises at least one air inlet opening (7) and the second profiled surface (5) comprises at least one air outlet opening (8) and the flying body (1) comprises a drive apparatus (12) with an air conveying apparatus (11), which is provided and configured for sucking in air through the at least one air inlet opening (7) and for discharging the sucked-in air through the at least one air outlet opening (8), wherein the at least one air outlet opening (8) is overlapped at least in regions by a deflector element (15), which, with the second profiled surface (5), delimits an air outlet gap (16) which is in flow connection with the air outlet opening (8), **characterized in that**, in operation, the air is sucked in through the at least one air inlet opening (7) by means of the air conveying apparatus (11) from an underside of the flying body (1), and **in that** the drive apparatus (12) can be operated in such a way during flight operation of the flying body (1), that air in the form of an intake air flow (21) is conveyed through the air inlet opening (7) from the underside of the flying body (1) in the direction of its upper side and an air film (22) flowing along the second profiled surface (5) detaches from the bearing surface (2) at a break-off point and flows under the flying body (1) as a free-jet air flow (23), so that a toroidal bearing vortex (23), which is present at least in regions between the first profiled surface (4) and the ground (13), is excited in the manner of a potential vortex, to which the free-jet air flow (23) and the intake air flow (21) are each present tangentially.

2. Flying body according to claim 1, **characterized in that** the at least one air inlet opening (7) is arranged centrally in the first profiled surface (4) and/or the at least one air outlet opening (8) is arranged centrally in the second profiled surface (5).

3. Flying body according to one of the preceding claims, **characterized in that** the bearing surface (2) is annular with respect to a longitudinal central axis (3) and the profile surfaces (4, 5), viewed in longitudinal section, are spaced apart from one another in regions in the axial direction.

4. Flying body according to one of the preceding claims, **characterized in that** the at least one air inlet opening (7) and the at least one air outlet opening (8) are flow-connected via a flow channel (9) configured in section centrally in the bearing surface (2), wherein a shroud propeller (10) of the air conveying apparatus (11) is arranged in the flow channel (9) so as to be rotatable about an axis of rotation.

5. Flying body according to one of the preceding claims, **characterized in that** the air outlet opening (8) is flow-connected to the air outlet gap (16) via a connecting channel (17) which, viewed in section, is present between the second profiled surface (5) and the deflector element (15).

6. Flying body according to one of the preceding claims, **characterized in that** the connection channel (17) comprises a cross-section which increases or decreases in the direction of the air outlet gap (16), so that it is designed in the manner of a nozzle.

7. Flying body according to one of the preceding claims, **characterized in that** the second profiled surface (5) comprises a first region extending from the bearing surface transition point (6) and a second region adjoining the first region and delimiting the air outlet gap (16), wherein - viewed in section - the first region is curved and the second region is curved or flat.

8. Flying body according to one of the preceding claims, **characterized in that** the first profiled surface (4), seen in section, is set back in regions relative to the bearing surface transition point (6) in the direction of the second profiled surface (5), so that a vortex chamber (26) is configured, which is reached around by the bearing surface transition point (6).

9. Flying body according to one of the preceding claims, **characterized in that** the first profiled surface (4) and the second profiled surface (5) are curved at least in regions in the same direction.

10. Flying body according to one of the preceding claims, **characterized in that** the second profiled surface (5) merges into the first profiled surface (4) at the bearing surface transition point (6) at an angle which is at least 0° and at most 60° with respect to a straight line (27) perpendicular to an imaginary plane which continuously accommodates the bearing surface transition point (6).

11. Flying body according to one of the preceding claims, **characterized in that** the deflector element (15) is displaceable for the global and/or local change of a flow crosssectional area of the air outlet gap (16).

12. Flying body according to one of the preceding claims, **characterized in that** first control elements (18) extend from the first profiled surface (4) and/or second control elements, each comprising a control fin (19), extend from the second profiled surface (5).

13. Flying body according to one of the preceding claims, **characterized in that** the first control elements (18) and/or the second control elements are drive-technically coupled to a control drive of the flying body (1) via a common coupling element (20).

14. Method for operating a flying body (1) according to one or more of the preceding claims, **characterized in that** the air is sucked in through the at least one air inlet opening (7) by means of the air conveying apparatus (11) from an underside of the flying body (1), and **in that** the drive apparatus (12) is operated during a flight operation of the flying body (1) in such a way that air in the form of an intake air flow (21) is conveyed through the air inlet opening (7) from the underside of the flying body (1) in the direction of its upper side and an air film (22) flowing along the second profile surface (5) detaches from the bearing surface (2) at a break-off point and flows under the flying body (1) as a free-jet air flow (23), so that a toroidal bearing vortex (23), which is present at least in regions between the first profiled surface (4) and the ground (13), is stimulated in the manner of a potential vortex, to which the free-jet air flow (23) and the intake air flow (21) are each present tangentially.

15. Method according to claim 14, **characterized in that** air in the form of an intake air flow (21) is sucked in through the air inlet opening (7) in an intake direction by means of the drive apparatus (12) and is discharged through the air outlet gap (16) in an outlet direction angled with respect to the intake direction in such a way, that at the bearing surface transition point (6) the air forms a free-jet air flow (23) in a free-jet direction, so that a bearing vortex (24) is configured between the intake air flow (21) and the free-jet air flow (23), which is present at least in regions under the first profiled surface (4).

## Revendications

1. Objet volant (1), comprenant une surface portante (2) qui, vue en coupe, est délimitée d'une part par une première surface profilée (4) inférieure, tournée vers un sol de la Terre (13) en fonctionnement normal de l'objet volant (1), et d'autre part par une deuxième surface profilée (5) supérieure passant conjointement avec la première surface profilée (4) sur un point de transition de surface portante (6), dans lequel la première surface profilée (4) comprend au moins une ouverture d'admission d'air (7) et la deuxième surface profilée (5) comprend au moins une ouverture de sortie d'air (8) et l'objet volant (1) présente un dispositif d'entraînement (12) avec un dispositif de transport d'air (11) qui est prévu et conçu pour aspirer de l'air par l'au moins une ouverture d'admission d'air (7) et pour faire sortir l'air aspiré à travers l'au moins une ouverture de sortie d'air (8), dans lequel l'au moins une ouverture de sortie d'air (8) est prise au moins par endroits par un élément de déviation (15) qui, avec la deuxième surface profilée (5), délimite une fente de sortie d'air (16) en liaison d'écoulement avec l'ouverture de sortie d'air (8), **caractérisé en ce qu'**en fonctionnement, l'aspiration de l'air a lieu à travers l'au moins une ouverture d'admission d'air (7) au moyen du dispositif de transport d'air (11) depuis une sous-face de l'objet volant (1), et que le dispositif d'entraînement (12), lorsque l'objet volant est en fonctionnement de vol, peut être ainsi entraîné que de l'air sous forme d'un flux d'air d'admission (21) est transporté à travers l'ouverture d'admission d'air (7) depuis la sous-face de l'objet volant (1) en direction de sa face supérieure, et un film d'air (22) s'écoulant le long de la deuxième surface profilée (5) se défait de la surface portante (2) en un point de rupture et s'écoule sous l'objet volant (1) en tant que flux d'air à jet libre (23), de sorte qu'un tourbillon porteur (23) formant un tore présent au moins par endroits entre la première surface profilée (4) et le sol de la Terre (13) soit excité à la manière d'un tourbillon potentiel, par rapport auquel le flux d'air à jet libre (23) et le flux d'air d'admission (21) sont respectivement présents de manière tangentielle.

2. Objet volant selon la revendication 1, **caractérisé en ce que** l'au moins une ouverture d'admission d'air (7) est disposée au centre de la première surface profilée (4) et/ou l'au moins une ouverture de sortie d'air (8) est disposée au centre de la deuxième surface profilée (5).

3. Objet volant selon l'une des revendications précédentes, **caractérisé en ce que** la surface portante (2) est annulaire par rapport à un axe médian longitudinal (3), et les surfaces profilées (4, 5), vues en coupe longitudinale, sont distantes l'une de l'autre par endroits dans le sens axial.

4. Objet volant selon l'une des revendications précédentes, **caractérisé en ce que** l'au moins une ouverture d'admission d'air (7) et l'au moins une ouverture de sortie d'air (8) sont reliées en technique d'écoulement par un canal de flux (9) formé en coupe au centre de la surface portante (2), dans lequel dans le canal de flux (9), une hélice carénée (10) du dispositif de transport d'air (11) est disposée rotative sur un pivot.

5. Objet volant selon l'une des revendications précédentes, **caractérisé en ce que** l'ouverture de sortie d'air (8) est reliée en technique d'écoulement avec la fente de sortie d'air (16) par un canal de liaison (17) qui, vu en coupe, est situé entre la deuxième surface profilée (5) et l'élément de déviation (15).

6. Objet volant selon l'une des revendications précédentes, **caractérisé en ce que** le canal de liaison (17) présente une section transversale s'agrandissant ou se rétrécissant dans le sens de la fente de sortie d'air (16), de sorte qu'elle a la forme d'une buse.

7. Objet volant selon l'une des revendications précédentes, **caractérisé en ce que** la deuxième surface profilée (5) présente une première partie partant du point de transition de surface portante (6) et une deuxième partie se raccordant à la première partie et délimitant la fente de sortie d'air (16), dans lequel, vu en coupe, la première partie est incurvée et la deuxième partie est incurvée ou plane.

8. Objet volant selon l'une des revendications précédentes, **caractérisé en ce que** la première surface profilée (4), vue en coupe, est décalée vers l'arrière par endroits en direction de la deuxième surface profilée (5) par rapport au point de transition de surface portante (6), de sorte qu'une chambre de turbulence (26) est formée qui est prise par le point de transition de surface portante (6).

9. Objet volant selon l'une des revendications précédentes, **caractérisé en ce que** la première surface profilée (4) et la deuxième surface profilée (5), vues en coupe, sont incurvées dans le même sens au moins par endroits.

10. Objet volant selon l'une des revendications précédentes, **caractérisé en ce que** la deuxième surface profilée (5), sur le point de transition de surface portante (6), passe dans la première surface profilée (4) dans un angle qui fait au moins 0° et au plus 60° par rapport à une droite (27) verticale sur un plan pensé recevant le point de transition de surface portante (6) de manière continue.

11. Objet volant selon l'une des revendications précédentes, **caractérisé en ce que** l'élément de déviation (15) peut être déplacé pour la modification globale et/ou locale d'une surface transversale d'écoulement de la fente de sortie d'air (16).

12. Objet volant selon l'une des revendications précédentes, **caractérisé en ce que** des premiers éléments de commande (18) partent de la première surface profilée (4) et/ou des deuxièmes éléments de commande partent de la deuxième surface profilée (5), lesquels présentent respectivement des ailerons de commande (19).

13. Objet volant selon l'une des revendications précédentes, **caractérisé en ce que** les premiers éléments de commande (18) et/ou les deuxièmes éléments de commande sont couplés en technique d'entraînement à un entraînement de commande de l'objet volant (1) par un élément de couplage (20) commun.

14. Procédé de fonctionnement d'un objet volant (1) selon l'une ou plusieurs des revendications précédentes, **caractérisé en ce que** l'aspiration de l'air par l'au moins une ouverture d'admission d'air (7) s'effectue au moyen du dispositif de transport d'air (11) depuis une sous-face de l'objet volant (1), et que le dispositif d'entraînement (12) est ainsi exploité en fonctionnement normal de l'objet volant (1) que de l'air sous forme d'un flux d'air d'admission (21) est transporté à travers l'ouverture d'admission d'air (7) depuis la sous-face de l'objet volant (1) en direction de sa face supérieure, et un film d'air (22) s'écoulant le long de la deuxième surface profilée (5) se défait de la surface portante (2) en un point de rupture et s'écoule sous l'objet volant (1) en tant que flux d'air à jet libre (23), de sorte qu'un tourbillon porteur (23) formant un tore présent au moins par endroits entre la première surface profilée (4) et le sol de la Terre (13) soit excité à la manière d'un tourbillon potentiel, par rapport auquel le flux d'air à jet libre (23) et le flux d'air d'admission (21) sont présents de manière tangentielle.

15. Procédé selon la revendication 14, **caractérisé en ce qu'**au moyen du dispositif d'entraînement (12), de l'air sous forme d'un flux d'air d'admission (21) est aspiré dans un sens d'aspiration à travers l'ouverture d'admission d'air (7) et sorti à travers la fente de sortie d'air (16) dans un sens de sortie en angle par rapport au sens d'aspiration de telle façon qu'au point de transition de surface portante (6), l'air forme un flux d'air à jet libre (23) dans un sens de jet libre, de sorte qu'un tourbillon porteur (24) est formé entre le flux d'air d'admission (21) et le flux d'air à jet libre (23) qui est présent au moins par endroits sous la première surface profilée (4).
